# EUROPÄISCHE PATENTSCHRIFT

(11) **EP 1 036 127 B1**
(45) Veröffentlichungstag und Bekanntmachung des Hinweises auf die Patenterteilung: **02.11.2005**
(21) Anmeldenummer: 98965705.1
(22) Anmeldetag: 27.11.1998
(51) Int. Cl.: C09J 167/02, C09J 167/04

(54) **KLEBSTOFF UND DESSEN VERWENDUNG IN VERBUNDWERKSTOFFEN**
ADHESIVE AND THE UTILIZATION THEREOF IN COMPOSITE MATERIALS
ADHESIF ET SON UTILISATION DANS DES MATERIAUX COMPOSITES

(30) Priorität: 02.12.1997 DE 19753474; 23.07.1998 DE 19833191
(43) Veröffentlichungstag der Anmeldung: 20.09.2000
(73) Patentinhaber: Henkel Kommanditgesellschaft auf Aktien, 40589 Düsseldorf (DE)
(72) Erfinder: FERENCZ, Andreas, D-40223 Düsseldorf (DE); TAAL, Eduard, Franciscus, D-40629 Düsseldorf (DE); EISENBERGER, Heike, D-40597 Düsseldorf (DE); FISCHER, Herbert, D-40229 Düsseldorf (DE)
(86) Internationale Anmeldenummer: PCT/EP1998/007667
(87) Internationale Veröffentlichungsnummer: WO 1999/028406

(56) Entgegenhaltungen:
- EP-A- 0 741 178
- WO-A-84/02144
- WO-A-95/10577
- US-A- 4 363 853
- DATABASE WPI Section Ch, Week 9404 Derwent Publications Ltd., London, GB; Class A17, AN 94-032009 XP002099924 & JP 05 339557 A (MITSUI TOATSU CHEM INC) , 21. Dezember 1993

## Beschreibung

Die Erfindung betrifft einen Klebstoff und dessen Verwendung, insbesondere bei der Herstellung eines Verbundwerkstoffs, beispielsweise für einen mindestens einen Vliesstoff ("nonwoven") enthaltenden Verbundwerkstoff.

Klebstoffe finden in zunehmendem Maße Eingang in viele Bereiche des täglichen Lebens, da sie in der Regel eine einfache, dauerhafte und sichere Methode zur Fixierung von Materialien darstellen. Insbesondere bei der Herstellung von Verbundwerkstoffen haben sich Klebstoffe zum Aufbau haltbarer Verbunde bewährt. Während die gegenseitige Verklebung von Materialien mit relativ polarer Struktur und damit in der Regel auch relativ polarer Oberfläche unter normalen Umständen keine Schwierigkeiten bereitet, gestaltet sich die Verbindung von Materialien mit wenig polarer Oberfläche in der Regel problematisch. Noch schwieriger kann sich jedoch die Verbindung wenig polarer Materialien mit polaren Materialien gestalten, da der zu verwendende Klebstoff Adhäsion mit beiden, unterschiedlich polaren Materialien ermöglichen soll.

Probleme bei der Herstellung von Verbundwerkstoffen können daher z.B. dann auftreten, wenn wenigstens eines der zu verbindenden Materialien ein Polyolefin ist. Polyolefine zeigen in der Regel eine schlechte Adhäsion gegenüber vielen Klebstoffen, was sowohl die Verklebung von Polyolefinmaterialien untereinander als auch die Verklebung von Polyolefinmaterialien mit andersartigen Materialien in Verbundwerkstoffen schwierig oder z.T. unmöglich macht.

Verbundwerkstoffe, wie sie insbesondere im Bereich der persönlichen Hygiene vorkommen, sind meist Materialien mit begrenzter Gebrauchsdauer, die beispielsweise nach einmaliger Benutzung weggeworfen werden, insbesondere Einmalprodukte. Unter Berücksichtigung abnehmenden Deponieraums werden daher zunehmend Verbundwerkstoffe in Betracht gezogen, die über wenigstens einen zumindest weitgehend biologisch abbaubaren Bestandteil verfügen, wodurch Deponieraum langfristig geschont würde.

Insbesondere bei Gegenständen wie Verpackungen, Steckschäumen, Bindematerialien, Folien, Beuteln, medizinischen Artikeln, beispielsweise Pflaster oder Verbandmaterial, oder Hygieneartikeln, beispielsweise Windeln, Tampons oder Binden, zeichnet sich eine Tendenz zu solchen biologisch mindestens teilweise abbaubaren Systemen ab. Da solche Gegenstände häufig Verbunde verschiedener Materialien darstellen und in der Regel mindestens eine Verklebung beinhalten ist es im Hinblick auf eine Verbesserung der biologischen Abbaubarkeit wünschenswert, wenn die Klebeverbindung ebenfalls wenigstens weitgehend biologisch abbaubar ist und trotzdem eine belastbare Verklebung auch unterschiedlicher Materialien gewährleistet.

So beschreibt die WO 97/04036 einen Klebstoff, der Polyhydroxyalkanoate als biologisch abbaubare (Co-)Polymere enthält. Der Klebstoff eignet sich sowohl zur Herstellung von Vliesmaterial als auch zur Herstellung saugfähiger Materialien, wie sie beispielsweise in Hygieneartikeln eingesetzt werden.

Die EP-A 0 705 895 betrifft einen Schmelzkleber auf Stärkebasis und dessen Verwendung zum Verkleben von Vliesstoffen auf ähnliche oder unterschiedliche Substrate. Der Klebstoff enthält 20 bis 60 Gew.-% eines Stärkeesters mit mittlerem oder hohem Substitutionsgrad. Wird der Klebstoff im Verbund mit Wasser einer bestimmten Temperatur in Kontakt gebracht, so läßt sich der Vliesstoff vom Substrat ablösen.

Die EP-A 0 741 177 betrifft biologisch abbaubare Schmelzklebstoffe aus Polylactiden. Insbesondere werden Polyhydroxybutyrat/Polyhydroxyvalerat-Polymere genannt, die als Tackifier Sucrosebenzoat enthalten. Die Schmelzklebstoffe werden zur Verklebung von Verpackungen, beispielsweise Kartonagen, in der Buchbinderei sowie zur Herstellung von Gewebeverbunden oder Hygieneartikeln zum einmaligen Gebrauch eingesetzt.

Die EP-A 0 741 178 betrifft biologisch abbaubare Schmelzklebstoffe aus Polyestern, die pro Wiederholungseinheit mindestens eine Hydroxygruppe tragen. Die beschriebenen Polyester werden mit Zusatzstoffen wie Tackifiern, Weichmachern oder Stabilisatoren kombiniert. Die Polyester werden durch Umsetzung von Dicarbonsäuren mit Diglycidylethern hergestellt.

Die aus dem Stand der Technik bekannten, biologisch abbaubaren Polymeren weisen bei ihrer Verwendung als Klebstoff Nachteile auf, die einen Einsatz auf unterschiedlichsten Gebieten verhindern oder zumindest erschweren, insbesondere dann, wenn an den Klebstoff hohe Anforderungen in bezug auf thermische oder mechanische Stabilität gestellt werden. So zeigen beispielsweise Polyhydroxybutyrate, Polyhydroxyvalerate oder Polylactide nur eine geringe mechanische und thermische Stabilität im Vergleich zu konventionellen Schmelzklebstoffen, was sie für Anwendungen unter erhöhter Temperatur ungeeigneter erscheinen läßt und hohe Anforderungen an die Verarbeitung in der Schmelze stellt. Weiterhin läßt bei vielen biologisch abbaubaren Klebstoffen die Stärke der Klebeverbindung bei niedrigen Temperaturen zu wünschen übrig.

Es war daher eine erste Aufgabe der vorliegenden Erfindung, einen Klebstoff zur Verfügung zu stellen, der eine belastbare Verbindung zwischen Materialien schaffen kann, von denen wenigstens eines ein Polyolefin enthält, und zwar möglichst auch dann wenn hautverträgliche Beschichtungen bei Hygiene-Produkten angewendet werden.

Es war eine weitere Aufgabe der Erfindung, einen Klebstoff zur Herstellung von Verbundwerkstoffen zur Verfügung zu stellen, der wenigstens teilweise biologisch abbaubar ist, hohen Anforderungen bezüglich mechanischer Stabilität und Wärmestabilität genügt, auch in der Kälte eine belastbare Klebeverbindung gewährleistet und aus leicht zugänglichen, marktüblichen Rohstoffen z.B. auf konventionellen Polykondensationsanlagen hergestellt werden kann.

Gelöst werden diese Aufgaben durch einen Klebstoff, der Komponenten A und B enthält, wobei es sich bei den Komponenten A und B um im weiteren Verlauf des Textes näher beschriebene Polyester mit unterschiedlichen Eigenschaften und/oder unterschiedlicher Zusammensetzung handelt.

Gegenstand der Erfindung ist daher ein Klebstoff gemäss Anspruch 1 enthaltend Komponenten A und B, bei dem
a) Komponente A mindestens einen Polyester mit einem Molekulargewicht (Mₙ) von mindestens 8.000 enthält und eine Gesamtschmelzenthalpie von höchstens 20 mJ/mg aufweist,
   und
b) Komponente B mindestens einen Polyester mit einem Molekulargewicht (Mₙ) von weniger als 8000, insbesondere 1000 bis 6500, und einer Glasübergangstemperatur von höchstens 60°C, insbesondere von -10 bis 40°C enthält,
wobei der Klebstoff eine Schmelzviskosität von 500 bis 25.000 mPas (Brookfield RVT DVII, 140°C, Spindel 27) und einen Erweichungspunkt von 70 bis 100°C (ASTM E28) aufweist.

Unter einem Polyester wird im Rahmen der vorliegenden Erfindung ein Polymeres verstanden, das durch Polykondensation von Polyolen und Polycarbonsäuren, vorzugsweise von Diolen und Dicarbonsäuren, gegebenenfalls mit einem untergeordneten Anteil an drei- oder höherwertigen Alkoholen und/oder Carbonsäuren, erhältlich ist.

Nachstehend sind Begriffe definiert, wie sie im Rahmen des vorliegenden Textes verwendet werden.

Der Begriff "amorph" betrifft Polymere, die keinen oder lediglich einen sehr geringen Anteil an kristallinen Strukturen aufweisen, also weitgehend isotrop sind. Mit "amorph" werden daher Polymere bezeichnet, die bei einer Differentialthermoanalyse (DTA; üblicherweise: Differential Scanning Calorimetry, DSC) keinen Schmelzübergang zeigen, oder deren Schmelzenthalpie bei weniger als 20 mJ/mg, vorzugsweise bei weniger als 15 mJ/mg und besonders bevorzugt bei weniger als 10 mJ/mg liegt. Demnach können diese Polymere beispielsweise Schmelzenthalpien von 18, 17, 16, 14, 13, 12, 11, 9 oder 8 mJ/mg aufweisen. Die für die Schmelzenthalpie des jeweiligen Polymeren gemessenen Werte könne jedoch auch darunter liegen, beispielsweise bei 5, 4, 3 oder 2 mJ/mg, oder darunter. In einer bevorzugten Ausführungsform beträgt die Schmelzenthalpie eines solchen Polymeren etwa 0 mJ/mg. Ebenfalls als Kriterium zur Beurteilung ob ein Polyester als amorph gilt, kann die dem Fachmann bekannte Beugung von Röntgen-, Elektronen- oder Neutronenstrahlen am Festkörper benutzt werden.

Der Begriff "teilkristallin" bedeutet, daß das so bezeichnete Polymere einen Anteil an kristallinen Strukturen aufweist, mithin also nicht vollständig isotrop ist. Typischerweise sind dies solche, die bei einer Differentialthermoanalyse (DTA; üblicherweise: Differential Scanning Calorimetry, DSC) einen Schmelzübergang zeigt dessen Schmelzenthalpie größer als 20 mJ/mg ist.

Unter der "Glasübergangstemperatur" wird der in der Polymerchemie übliche Begriff für die Temperatur verstanden, bei dem in einem Polymeren Molekularbewegungen größerer Kettensegmente detektierbar sind. In der Regel liegt die detektierbare Untergrenze, in Abhängigkeit vom benutzten Verfahren, bei etwa 5 Kettenatomen im Polymerrückgrat.

Der Begriff "biologisch abbaubar" bezieht sich auf ein Polymeres, das durch Mikroorganismen oder unter Einwirkung von Enzymen im günstigsten Fall vollständig zu Kohlendioxid und Wasser abgebaut wird. Methoden zur Bestimmung der biologischen Abbaubarkeit finden sich beispielsweise in den "OECD Guidelines for Testing of Chemicals" 301 A bis F sowie in den ISO-Normen 10708 und 10708 (modifiziert). Ein Überblick findet sich in Römpp Lexikon Chemie, 10. Auflage, Band 1 (1996), Georg Thieme Verlag, Stuttgart, New York.

Die im erfindungsgemäßen Klebstoff vorliegende Komponente A enthält einen amorphen Polyester mit einem Zahlenmittel des Molekulargewichts (Mₙ) von mindestens etwa 8000. In einer bevorzugten Ausführungsform der Erfindung weist der in Komponente A enthaltene Polyester ein Molekulargewicht von mindestens etwa 9000 und höchstens etwa 30.000 auf, wobei ein Polyester mit einem Molekulargewicht (Mₙ) von etwa 10.000, 12.000, 14.000 16.000 oder 18.000 bevorzugt ist.

Die Komponente A kann beispielsweise nur einen einzigen Typ Polyester, gegebenenfalls jedoch auch ein Gemisch aus zwei oder mehr verschiedenen Polyestern mit einem Zahlenmittel des Molekulargewichts (Mₙ) von mindestens etwa 8000 enthalten.

Wenn die Komponente A nur einen einzigen Typ Polyester enthält, so ist es im Rahmen der vorliegenden Erfindung vorteilhaft, wenn die Schmelzenthalpie des Poly-esters höchstens 20 mJ/mg beträgt. Wird als Komponente A im erfindungsgemäßen Klebstoff ein Gemisch aus zwei oder mehr Polyestern eingesetzt, so bezieht sich der für die Schmelzenthalpie angegebene Maximalwert auf die Gesamtschmelzenthalpie der Komponente A. Enthält die Komponente A beispielsweise ein Gemisch aus zwei Typen von Polyestern mit einem individuellen Molekulargewicht (Mₙ) von mindestens 8.000, so kann einer der beiden Polyester eine Schmelzenthalpie von mehr als etwa 20 mJ/mg aufweisen, mithin also teilkristallin sein, sofern die Gesamtschmelzenthalpie der Komponente A nicht mehr als 20 mJ/mg beträgt. Die gleiche Voraussetzung gilt auch dann. wenn in Komponente A ein Gemisch aus drei oder mehr Typen von Polyestern vorliegt. Dabei kann ein Polyester oder können mehrere Polyester teilkristallin sein, wenn die Gesamtschmelzenthalpie der Komponente A höchstens 20 mJ/mg beträgt.

In einer bevorzugten Ausführungsform der Erfindung beträgt die Glasübergangstemperatur der Komponente A höchstens 60°C, bevorzugt liegt sie in einem Bereich von etwa -10 bis etwa 40°C, besonders bevorzugt in einem Bereich von etwa 5°C bis etwa 20°C.

Die Komponente A weist vorteilhafterweise eine Viskosität von etwa 5000 bis etwa 100.000 mPas bei 90°C (Brookfield CAP 2000) und etwa 400 bis etwa 15.000 mPas bei 140°C (Brookfield RVT DII, Spindel 27, 10 U/min) auf.

Eine in diesem Bereich liegende Viskosität der Komponente A ergibt, in Abhängigkeit von der gesamten Zusammensetzung des erfindungsgemäßen Klebstoffs, in der Regel eine besonders vorteilhafte Verarbeitungsviskosität. Besonders bevorzugt ist eine Viskosität von etwa 7.000 bis etwa 20.000 mPas, wobei eine Viskosität von etwa 8.000 bis etwa 15.000 mPas besonders bevorzugt ist.

Die OH-Zahl der Komponente A liegt vorteilhafterweise in einem Bereich von etwa 1 bis etwa 20 mg KOH/g Komponente A. Beispielsweise beträgt die OH-Zahl etwa 5, 8, 9, 10, 11, 13 oder 15 mg KOH/g.

Der erfindungsgemäße Klebstoff enthält als Komponente B mindestens einen Polyester mit einem Molekulargewicht (Mₙ) von weniger als 8000, insbesondere etwa 400 bis etwa 6500. Bevorzugte Obergrenzen für das Molekulargewicht (Mₙ) liegen beispielsweise in einem Bereich bei etwa 5000, etwa 4000 oder etwa 3000, bevorzugte Untergrenzen bei etwa 1000, etwa 1500 oder etwa 2000. Beispielhaft zum Einsatz in Komponente B geeignete Polyester weisen Molekulargewichte (Mₙ) von etwa 1500 bis etwa 3500 auf.

In besonderen Fällen, beispielsweise zum Einstellen einer bestimmten Schmelzviskosität, kann es vorteilhaft sein, wenn Komponente B einen niedermolekularen Polyester mit einem Molekulargewicht (Mₙ) von etwa 400 bis etwa 800, insbesondere von etwa 400 bis etwa 500, enthält.

Die Obergrenze der Glasübergangstemperatur der zum Einsatz in Komponente B geeigneten Polyester beträgt üblicherweise etwa 60°C. Vorteilhafterweise liegt die Obergrenze bei etwa 40°C oder darunter, etwa bei 30°C oder insbesondere bei etwa 20°C. Eine geeignete Untergrenze für die Glasübergangstemperatur ist etwa -80°C, wobei Untergrenzen von etwa -40°C oder -30°C, insbesondere etwa -15°C besonders geeignet sind.

Besonders geeignet sind Polyester mit einer Glasübergangstemperatur in einem Bereich von etwa 5 bis etwa 20°C.

In bestimmten Fällen, beispielsweise um die Flexibilität einer Klebeverbindung auch bei tiefen Temperaturen zu gewährleisten, sind Polyester mit einer Glasübergangstemperatur in einem Bereich von etwa -40°C bis etwa - 15°C besonders geeignet. In besonderen Fällen eignen sich hierzu auch Polyester, deren Glasübergangstemperatur bei weniger als -40°C, beispielsweise zwischen etwa -40°C und etwa -80°C liegt.

Der in Komponente B eingesetzte Polyester kann amorph oder teilkristallin sein, ist jedoch vorzugsweise amorph, im Sinne der obigen Definition.

In einer bevorzugten Ausführungsform enthält daher Komponente B einen amorphen Polyester mit einem Molekulargewicht (Mₙ) von etwa 1500 bis etwa 4000, einer Glasübergangstemperatur T_{g} von etwa 5 bis etwa 20°C und einer Viskosität von etwa 3.500 bis etwa 25.000 mPas (Brookfield CAP 2000, 90°C, Cone 6, 50 U/min, 25 s Meßzeit) als Komponente B1.

In einer weiteren bevorzugten Ausführungsform enthält Komponente B einen amorphen Polyester mit einem Molekulargewicht (Mₙ) von 400 bis 4000 und einer Glasübergangstemperatur T_{g} von -40 bis -15°C als Komponente B2.

In einer weiteren bevorzugten Ausführungsform enthält Komponente B einen amorphen Polyester mit einem Molekulargewicht (Mₙ) von weniger als 500 und einer Glasübergangstemperatur T_{g} von weniger als -40 °C als Komponente B3.

Komponente B kann beispielsweise nur einen einzigen Typ Polyester enthalten. So kann Komponente B beispielsweise aus einem beliebigen, unter die allgemeine Definition der Komponente B fallenden Polyester bestehen, insbesondere aus einem der oben genannten, mit B1, B2 und B3 benannten Polyester. Gegebenenfalls kann es jedoch zur Erzielung besonders guter Hafteigenschaften, insbesondere auf Polyolefinoberflächen, bevorzugt sein, wenn Komponente B mehr als einen Polyester enthält. So kann Komponente B beispielsweise eine der Komponenten B1, B2 oder B3 oder ein Gemisch aus zwei oder mehr davon, und zusätzlich dazu einen weiteren, unter die allgemeine Spezifikation der Komponente B fallenden Polyester enthalten.

In einer bevorzugten Ausführungsform enthält Komponente B ein Gemisch aus mindestens zwei Polyestern, die eine unterschiedliche Glasübergangstemperatur oder ein unterschiedliches Molekulargewicht (Mₙ) oder beides aufweisen. Vorzugsweise beträgt der Unterschied der Glasübergangstemperaturen dabei mindestens etwa 3°C, bevorzugt mindestens etwa 10°C, während das Molekulargewicht (Mₙ) sich bevorzugt um mindestens etwa 500, insbesondere um mindestens etwa 1.000 unterscheidet.

In einer weiteren bevorzugten Ausführungsform enthält Komponente B ein Gemisch aus mindestens zwei der Komponenten B1, B2 oder B3. In diesem Falle ist es möglich, daß mindestens eine der eingesetzten Komponenten B1, B2 oder B3 amorph ist, und eine weitere der eingesetzten Komponenten B1, B2 oder B3 teilkristallin ist.

Bei den zum Einsatz im erfindungsgemäßen Klebstoff gemäss Anspruch 1 geeigneten Polyestern kann es sich grundsätzlich um jede Art von Polyester handeln, der aufgrund seiner Eigenschaften jeweils die oben angegebenen Spezifikationen zum Einsatz in Komponente A und Komponente B erfüllt. In einer bevorzugten Ausführungsform sind die Polyester biologisch abbaubar.

Die Polyester werden durch Polykondensation von Alkohol- und Säurekomponenten gewonnen, vorzugsweise durch Polykondensation eines Gemisches aus zwei oder mehr Dicarbonsäuren und einem Diol oder einem Gemisch aus zwei oder mehr Diolen.

Komponente A enthält einen Polyester, der aus mindestens einer ersten und einer zweiten Säurekomponente und mindestens einer ersten Alkoholkomponente aufgebaut ist.

Komponente B enthält einen Polyester, der aus mindestens einer ersten und einer zweiten Säurekomponente und mindestens einer ersten Alkoholkomponente aufgebaut ist.

Dabei werden die Begriffe "Säurekomponente" oder "Alkoholkomponente" sowohl im Zusammenhang mit der Synthese eines Polyesters als auch im Zusammenhang mit dem Polyestermolekül selbst gebraucht. "Säurekomponente" steht daher nicht nur für die freie Säure oder das Salz der freien Säure, sondern schließt im Rahmen der Polyestersynthese auch Derivate freier, zur Polymersynthese geeigneter Säuren mit ein. Solche Derivate können beispielsweise die Ester der Säure mit aliphatischen C₁₋₄-Alkoholen oder die Säureanhydride sein. Im Zusammenhang mit den Polyestermolekülen selbst steht "Säurekomponente" für den über Esterbindungen im Polymerrückgrat eingebundenen Säurebaustein. Entsprechendes gilt für "Alkoholkomponente" im Rahmen des vorliegenden Textes.

Sowohl als erste als auch als zweite Säurekomponente können dabei aliphatische oder cycloaliphatische Polycarbonsäuren, die gegebenenfalls olefinisch ungesättigte Doppelbindungen enthalten können, oder aromatische Polycarbonsäuren oder Gemische aus zwei oder mehr davon eingesetzt werden. Bevorzugt sind dabei aliphatische oder cycloaliphatische Di- oder Tricarbonsäuren oder aromatische Di- oder Tricarbonsäuren oder Gemische aus zwei oder mehr davon.

Als aliphatische oder cycloaliphatische Polycarbonsäuren können Polycarbonsäuren mit etwa 4 bis etwa 40 C-Atomen, vorzugsweise etwa 5 bis etwa 25 C-Atomen eingesetzt werden. Insbesondere sind dies Butandicarbonsäure (Bernsteinsäure), Pentandicarbonsäure (Glutarsäure), Hexandicarbonsäure (Adipinsäure), Heptandicarbonsäure (Pimelinsäure), Octandicarbonsäure (Korksäure, Suberinsäure), Nonandicarbonsäure (Azelainsäure), Decandicarbonsäure (Sebacinsäure) und deren gegebenenfalls verzweigte Isomeren und höhere Homologen, sowie Maleinsäure, Fumarsäure, dimere oder trimere Fettsäuren, Cyclohexandicarbonsäure, Cyclohexendicarbonsäure, Cyclohexadiendicarbonsäure, Endomethylenhexahydrophthalsäure oder Cyclohexantricarbonsäure. Im Sinne des oben gesagten fallen ebenso die Säureanhydride der genannten Polycarbonsäuren (sofern existent) oder deren Ester mit niederen Alkoholen mit etwa 1 bis etwa 5 C-Atomen unter "Säurekomponente".

Als aromatische Polycarbonsäuren können Polycarbonsäuren mit etwa 6 bis etwa 24 Kohlenstoffatomen eingesetzt werden. Insbesondere sind dies Phthalsäure, Isophthalsäure, Terephthalsäure oder Trimellithsäure.

Es ist im Rahmen der vorliegenden Erfindung besonders bevorzugt, wenn Komponente A oder Komponente B oder Komponente A und Komponente B aus einer aromatischen Säurekomponente als einer ersten Säurekomponente aufgebaut sind.

Im Rahmen der vorliegenden Erfindung ist es dabei insbesondere bevorzugt, wenn Komponente A einen Polyester enthält, der aus einer Säure ausgewählt aus o-Phthalsäure und Isophthalsäure, insbesondere aus Isophthalsäure, als einer ersten Säurekomponente, aufgebaut ist.

Besonders zum Einsatz als Bestandteil der Komponente A geeignete Polyester sind aus einer aliphatischen Dicarbonsäure als einer zweiten Säurekomponente aufgebaut. Insbesondere sind dies Adipinsäure oder Sebacinsäure.

Ein besonders zum Einsatz als Bestandteil der Komponente A geeigneter Polyester ist aus Isophthalsäure als einer ersten Säurekomponente und Adipinsäure als einer zweiten Säurekomponente aufgebaut, wobei die erste Säurekomponente und die zweite Säurekomponente in der Regel in einem molaren Verhältnis von etwa 0,5 : 1,5 bis etwa 1,5 : 0,5, insbesondere etwa 0,8 : 1,2 bis etwa 1,2 : 0,8 stehen.

Im Rahmen der vorliegenden Erfindung ist es bevorzugt, wenn Komponente B einen Polyester enthält, der auf einer Säure ausgewählt aus o-Phthalsäure, Isophthalsäure oder Terephthalsäure, insbesondere Terephthalsäure oder o-Phthalsäure, als einer ersten Säurekomponente, aufgebaut ist.

Besonders zum Einsatz als Bestandteil der Komponente B geeignete Polyester enthalten sind auf einer aliphatischen Dicarbonsäure als einer zweiten Säurekomponente aufgebaut. Insbesondere sind dies Adipinsäure oder Sebacinsäure.

Ein besonders zum Einsatz als Bestandteil der Komponente B geeigneter Polyester ist auf o-Phthalsäure oder Terephthalsäure als einer ersten Säurekomponente und auf Adipinsäure als einer zweiten Säurekomponente aufgebaut, wobei die erste Säurekomponente und die zweite Säurekomponente in der Regel in einem molaren Verhältnis von etwa 0,5 : 1,5 bis etwa 1,5 : 0,5, insbesondere etwa 0,8 : 1,2 bis etwa 1,2 : 0,8 stehen.

In besonderen Fällen kann es vorteilhaft sein, wenn ein in Komponente B vorliegender Polyester aus drei Säurekomponenten aufgebaut ist. Dabei sind in der Regel eine erste und eine zweite Säurekomponente aromatische Säurekomponenten, während eine dritte Säurekomponente eine aliphatische oder eine Cycloaliphatische Säurekomponente ist. Besonders als erste und zweite Säurekomponente geeignet sind hierbei Terephthalsäure und Isophthalsäure, während Adipinsäure als dritte Säurekomponente bevorzugt ist.

Die zum Einsatz in Komponenten A und B geeigneten Polyester sind auf mindestens einer ersten Alkoholkomponente aufgebaut. Insbesondere für zum Einsatz in Komponente B geeignete Polyester ist es bevorzugt, wenn noch eine zweite Alkoholkomponente am Aufbau beteiligt ist. In einer bevorzugten Ausführungsform der Erfindung enthält Komponente B einen Polyester, der auf nur einer Alkoholkomponente aufgebaut ist, beispielsweise als Komponente B1, im Gemisch mit einem weiteren Polyester, der auf zwei Alkoholkomponenten aufgebaut ist, beispielsweise als Komponente B2.

Sowohl als erste als auch als zweite Alkoholkomponente geeignet sind polyfunktionelle Alkohole, beispielsweise difunktionelle Alkohole, mit zwei bis vier C-Atomen. Besonders geeignet sind dabei Ethylenglykol, 1,2-Propylenglykol, 1,3-Propylenglykol, 1,2-Butylenglykol, 1,3-Butylenglykol, 2,3-Butylenglykol oder 1,4-Butylenglykol. Ebenfalls geeignet sind difunktionelle Alkohole mit 5 oder mehr C-Atomen, beispielsweise Neopentylglykol, die isomeren Pentandiole und Hexandiole, Dianhydrosorbit oder Etheralkohole wie Diethylenglykol oder Triethylenglykol.

Neben den genannten difunktionellen Alkoholen können im Rahmen der vorliegenden Erfindung können am Aufbau der zum Einsatz in Komponente A oder Komponente B vorgesehenen Polyester in untergeordneten Mengen auch tri- oder höherfunktionelle Alkohole in als Alkoholkomponente beteiligt sein. Beispielsweise sind dies Glycerin, Trimethylolpropan, Pentaerythrit oder Zuckeralkohole wie Glucose oder Sorbit. Die Hydroxygruppen der tri-oder höherfunktionellen Alkohole können dabei teilweise, d.h., bis auf zwei verbleibende Hydroxygruppen, mit Carbonsäuren mit 1 bis etwa 24 C-Atomen, insbesondere mit monofunktionellen Fettsäuren, verestert sein.

Als Alkoholkomponente im Sinne der vorliegenden Erfindung sind auch die Etheralkohole (Hydroxygruppen tragende Ether) der oben genannten Alkohole geeignet, sowohl Ether die aus der Umsetzung gleicher Alkohole erhältlich sind als auch gemischte Ether, wie sie bei der Umsetzung verschiedener Alkohole untereinander entstehen.

Ebenfalls im Rahmen der vorliegenden Erfindung zum Einsatz als Alkohol-komponente geeignet sind die Umsetzungsprodukte der oben genannten Alkohole mit C₁₋₄-Alkylenoxiden, wobei vorzugsweise im Durchschnitt etwa 1 bis etwa 10 Alkylenoxidmoleküle mit jeweils einer OH-Gruppe des Alkohols reagiert haben.

Als zweite Alkoholkomponente kommen alle Alkohole in Frage, die als erste Alkoholkomponente eingesetzt werden können. Die erste und die zweite Alkoholkomponente unterscheiden sich beispielsweise entweder im Molekulargewicht, d.h., daß die zweite Alkoholkomponente ein höheres Molekulargewicht aufweist als die erste Alkoholkomponente oder, sofern es sich um Verbindungen gleichen Molekulargewichts handelt, die zweite Alkoholkomponente ein anderes Unterscheidungsmerkmal aufweist, beispielsweise ein anderes Substitutionsmuster der funktionellen Gruppen oder ein anderes, beispielsweise ein verzweigtes, Kohlenstoffgerüst.

Die im erfindungsgemäßen Klebstoff als Komponente A oder Komponente B einsetzbaren Polyester enthalten damit vorzugsweise Polyester, die jeweils so aufgebaut sind, daß sie
d) als eine erste Säurekomponente eine Säure ausgewählt aus o-Phthalsäure, Isophthalsäure oder Terephthalsäure,
e) als eine zweite Säurekomponente, eine Säure ausgewählt aus Adipinsäure und Sebacinsäure,
f) als eine erste Alkoholkomponente Ethylenglykol, Neopentylglykol, 1,2-Propylenglykol, 1,3-Propylenglykol, den isomeren Butylenglykolen, Pentandiolen und Hexandiolen, Dianhydrosorbit, Diethylenglykol, Triethylenglykol, deren reinen oder untereinander gemischten Ethern, oder deren Umsetzungsprodukten mit C₁₋₄-Alkylenoxiden,
aufweisen.

Bei einem zum Einsatz in Komponente A geeigneten Polyester ist es bevorzugt, wenn als eine erste Alkoholkomponente Ethylenglykol am Aufbau beteiligt ist.

Polyester, die zum Einsatz in Komponente B geeigneten sind, können beispielsweise auf nur einer Alkoholkomponente aufgebaut sein. Es ist jedoch bevorzugt, wenn Komponente B einen oder mehrere Polyester enthält, die auf zwei oder mehr Alkoholkomponenten aufgebaut sind. Insbesondere zum Einsatz in solchen Polyestern geeignet sind beispielsweise Ethylenglykol, 1,2-Propandiol, 1,4-Butandiol, Neopentylglykol oder 2,3-Pentandiol, wobei insbesondere im Hinblick auf die biologische Abbaubarkeit der erfindungsgemäßen Klebstoffe Polyester bevorzugt sind, die auf Ethylenglykol und 1,2-Propandiol, 2,3-Butandiol, 2,3-Pentandiol oder Dianhydrosorbit als Alkoholkomponenten aufgebaut sind.

Als Komponente A ist beispielsweise ein Polyester geeignet, der ausgehend von Isophthalsäure, Adipinsäure, Diethylenglykol und Ethylenglykol aufgebaut ist.

Als Komponente B1 ist beispielsweise ein Polyester geeignet, der ausgehend von Adipinsäure, Phthalsäure, 1,2-Propandiol und Ethylenglykol oder ausgehend von Adipinsäure, Phthalsäure, 2,3-Butandiol und Ethylenglykol aufgebaut ist.

Als Komponente B2 ist beispielsweise ein Polyester geeignet, der ausgehend von Terephthalsäure, Isophthalsäure, Adipinsäure und 1,4-Butandiol aufgebaut ist.

Die erfindungsgemäß in den Komponenten A und B eingesetzten Polyester können gegebenenfalls in ihrem ursprünglichen Molekulargewicht (Mₙ) durch Kettenverlängerung verändert werden. So kann beispielsweise ein in Komponente A einsetzbarer Polyester mit einem Molekulargewicht (Mₙ) von etwa 4.000 durch entsprechende Kettenverlängerung in seinem Molekulargewicht (Mₙ) verdoppelt oder verdreifacht werden, so daß sich schließlich das erforderliche Molekulargewicht (Mₙ) von etwa 8.000 oder etwa 12.000 ergibt. Bei der Kettenverlängerung ist zu beachten, daß der Polyester anschließend immer noch die Kriterien bezüglich Molekulargewicht (Mₙ) und Glasübergangstemperatur erfüllt.

Eine solche Kettenverlängerung läßt sich am besten mit Polyestern durchführen, die terminal, d.h. am Ende der Polymerkette, entweder jeweils eine OH-Gruppe oder jeweils eine Carbonsäuregruppe tragen. Besonders gut sind Polyester mit terminalen OH-Gruppen zur Kettenverlängerung geeignet.

Die Kettenverlängerung selbst wird mit Hilfe von Kettenverlängerungsmitteln ausgeführt, die in der Lage sind, mit zwei terminalen Gruppen des Polyesters zu reagieren und damit eine Verknüpfung zwischen zwei Polyestermolekülen unter erhöhung des Molekulargewichts (Mₙ) zu bewirken. Hierzu gut geeignet sind Moleküle mit mindestens zwei Epoxidgruppen, beispielsweise Diglycidylether aus difunktionellen Alkoholen und Epichlorhydrin.

Besonders gut geeignet sind auch Verbindungen mit mindestens zwei Isocyanatgruppen im Molekül, beispielsweise die üblichen zur Polyurethanherstellung eingesetzten Di-isocyanate wie Toluylendiisocyanat (TDI), Hexamethylendiisocyanat (HDI), die isomeren Diphenylmethandiisocyanate oder Isophorondiisocyanat (IPDI).

In einer bevorzugten Ausführungsform der Erfindung werden die in den Komponente A und B eingesetzten Polyester daher mit Diisocyanaten kettenverlängert. Das Molverhältnis von Polyester zu Diisocyanat beträgt dabei mindestens etwa 4:3 (entsprechend einer durchschnittlichen Vervierfachung des Molekulargewichts (Mₙ) des Polyesters), so daß durchschnittlich jede Polymerkette etwa 6 Urethangruppen aufweist. Die Obergrenze für das Verhältnis Polyester zu Diisocyanat liegt bei etwa 5:1, insbesondere etwa 3:1 oder 2:1, was im letztgenannten Fall etwa einer durchschnittlichen Verdopplung des Molekulargewichts (Mₙ) mit durchschnittlich 2 Urethangruppen pro Polyestermolekül entspricht. Zwischen diesen Grenzen sind entsprechend alle Zwischenwerte im Rahmen der vorliegenden Erfindung einsetzbar.

In einer bevorzugten Ausführungsform der Erfindung besteht Komponente A aus einem oder zwei Polyestern, welche die o.g. Kriterien für einen Einsatz in Komponente A erfüllen. In einer weiteren bevorzugten Ausführungsform besteht Komponente B aus zwei oder drei Polyestern, welche die o.g. Kriterien für einen Einsatz in Komponente B erfüllen.

Die Komponenten A und B können im erfindungsgemäßen Klebstoff in unterschiedlichen Anteilen am gesamten Klebstoff vorliegen. Die Komponente A weist einen Anteil von etwa 20 Gew.-% bis etwa 95 Gew.-% am gesamten Klebstoff auf. Bevorzugt ist ein Anteil von etwa 30 bis etwa 75 Gew.-%, in einer besonders bevorzugten Ausführungsform ein Anteil von etwa 35 bis etwa 45 Gew.-%.

Komponente B hat am gesamten Klebstoff einen Anteil von etwa 80 Gew.-% bis etwa 5 Gew.-%. Bevorzugt ist ein Anteil von etwa 70 bis etwa 25 Gew.-%. In einer bevorzugten Ausführungsform hat die Komponente B einen Anteil von etwa 55 bis etwa 65 Gew.-%.

Gegebenenfalls kann der erfindungsgemäße Klebstoff noch Zusatzstoffe enthalten. Die Zusatzstoffe haben am gesamten Klebstoff einen Anteil von bis zu etwa 60 Gew.-%.

Zu den im Rahmen der vorliegenden Erfindung einsetzbaren Zusatzstoffen zählen beispielsweise Weichmacher, Wachsverdünner, Stabilisatoren, Antioxidantien, Farbstoffe oder Füllstoffe.

Als Weichmacher werden beispielsweise Weichmacher auf Basis von Phthalsäure eingesetzt, insbesondere Dialkylphthalate, wobei als Weichmacher Phthalsäureester bevorzugt sind, die mit einem etwa 6 bis etwa 12 Kohlenstoffatomen aufweisenden, linearen Alkanol verestert wurden. Besonders bevorzugt ist hierbei das Dioctylphthalat.

Ebenfalls als Weichmacher geeignet sind Benzoatweichmacher, beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Polyethylenglykole und deren Derivate, beispielsweise Diphenylether von Poly(ethylenglykol), flüssige Harzderivate, beispielsweise der Methylester von hydriertem Harz, pflanzliche und tierische Öle, beispielsweise Glycerinester von Fettsäuren und deren Polymerisationsprodukte. Es ist im Rahmen der vorliegenden Erfindung besonders bevorzugt, wenn der eingesetzte Weichmacher oder das eingesetzte Gemisch aus Weichmachern wenigstens weitgehend biologisch abbaubar ist.

Verschiedene Klebstoffanwendungen können Wachsverdünner erfordern, um die Schmelzviskosität zu vermindern oder die Kohäsion des Schmelzklebstoffs zu verändern, ohne die Klebeeigenschaften zu vermindern.

Geeignete Wachse umfassen beispielsweise N-(2-Hydroxyhexyl)-12-hydroxy-stearamid, hydriertes Rizinusöl, oxidierte, synthetische Wachse, N,N'-Ethylenbisstearamid, Poly(ethylenoxid) mit einem Molekulargewicht (Mₙ) von mehr als etwa 1.000 und funktionalisierte synthetische Wachse wie Escomer® H101 (Hersteller: Exxon). Wenn im Rahmen der vorliegenden Erfindung Wachskomponenten als Zusatzstoffe eingesetzt werden, so der Einsatz von biologisch abbaubaren Wachskomponenten bevorzugt.

Eine Wachskomponente und eine Weichmacherkomponente können als Zusatzstoffe nebeneinander vorliegen.

Zu den im Rahmen der Erfindung als Zusatzstoffe einsetzbaren Stabilisatoren oder Antioxidantien, zählen gehinderte Phenole hohen Molekulargewichts (Mₙ), polyfunktionelle Phenole und schwefel- und phosphorhaltige Phenole. Im Rahmen der Erfindung als Zusatzstoffe einsetzbare Phenole sind beispielsweise 1,3,5-Trimethyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octadecyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Di-tert-butylphenol; 6-(4-Hydroxyphenoxy)-2,4-bis(n-octyl-thio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-ditert-butyl-4-hydroxyphenyl)propionat].
Weitere Zusatzstoffe können in die erfindungsgemäßen Klebstoffe mit aufgenommen werden um bestimmte Eigenschaften zu variieren. Darunter können beispielsweise Farbstoffe wie Titandioxid, Füllstoffe wie Talcum, Ton und dergleichen sein. Gegebenenfalls können in den erfindungsgemäßen Klebstoffen geringe Mengen an thermoplastischen Polymeren vorliegen, beispielsweise Ethylenvinylacetat (EVA), Ethylenacrylsäure, Ethylenmethacrylat und Ethylen-n-butylacrylatcopolymere, die dem Klebstoff gegebenenfalls zusätzliche Flexibilität, Zähigkeit und Stärke verleihen. Es ist ebenfalls möglich, und im Rahmen der vorliegenden Erfindung bevorzugt, bestimmte hydrophile Polymere zuzugeben, beispielsweise Polyvinylalkohol, Hydroxyethylcellulose, Hydroxypropylcellulose, Polyvinylmethylether, Polyethylenoxid, Polyvinylpyrrolidon, Polyethyloxazoline oder Stärke oder Celluloseester, insbesondere die Acetate mit einem Substitutionsgrad von weniger als 2,5, welche die Benetzbarkeit der Klebstoffe erhöhen.

Die Herstellung der erfindungsgemäßen Klebstoffe kann durch übliche dem Fachmann, im Rahmen der Herstellung von polymeren Mischungen bekannten Techniken erfolgen.

Bei den erfindungsgemäßen Klebstoffen handelt es sich vorzugsweise um Schmelzklebstoffe. Die Klebstoffe können haftklebrige Eigenschaften aufweisen, es ist jedoch ebenso möglich und im Rahmen der vorliegenden Erfindung vorgesehen, die Klebstoffe als Schmelzklebstoffe zu formulieren, die keine haftklebrigen Eigenschaften aufweisen.

Die erfindungsgemäßen Klebstoffe weisen eine Schmelzviskosität von etwa 500 bis etwa 25.000 mPas (Brookfield RVT DVII, 140°C, Spindel 27) auf. Geringere Schmelzviskositäten sind möglich, in der Regel gestaltet sich ein Auftrag auf das zu verbindende Substrat dann jedoch schwierig, wenn nicht geeignete Auftragsmöglichkeiten benutzt werden. Auch höhere Schmelzviskositäten können bei den erfindungsgemäßen Klebstoffen möglich sein, wobei dann jedoch in der Regel eine höhere Verarbeitungstemperatur gewählt werden muß, was für viele zu verklebende Substrate jedoch nachteilig sein kann.

Die erfindungsgemäßen Klebstoffe weisen einen Erweichungspunkt von etwa 70 bis etwa 100°C (bestimmt nach der "Ring and Ball" Methode, ASTM E28) auf. Besonders bevorzugte Erweichungspunkte liegen beispielsweise bei etwa 75, 80, 85, 90 oder 95 °C.

Der erfindungsgemäße Klebstoff ist hydrophil, und zwar in dem Sinne, daß seine Kontaktwinkel gegenüber Wasser im Bereich von 20 bis 50, vorzugsweise von 27 bis 38 ° liegt. Zur Messung des Kontaktwinkels wird eine 100 bis 200 µm dicke Klebstoffschicht auf Silikonpapier aufgerakelt und nach folgender Methode geprüft:
Die Messungen werden mit einem "Kontaktwinkelmeßgerät G2" der Fa. Krüss durchgeführt. Hierzu wird jeweils ein Tropfen von vier Testflüssigkeiten (Wasser, Glycerin, Diethylenglykol, Dekalin) mit jeweils bekannter Oberflächenspannung mit einer Spritze auf einen Hotmelt-Film gegeben und der Kontaktwinkel Theta bei Raumtemperatur gemessen. Dazu wartet man so lange, bis sich der Winkel zeitlich nicht mehr ändert (statischer Kontaktwinkel).

Die Hydrophilie des Klebstoffes beruht auf der Hydrophilie der Polyester. Sie kann durch Variation von deren Endgruppen-Konzentration und/oder Verwendung von Polyethylenglykol als Alkohol-Komponente verändert werden. Die Hydrophilie des Klebstoffes kann natürlich auch durch Zusätze beeinflußt werden, z.B. durch Tenside.
Hydrophile Klebstoffe sind in der Hygieneprodukt-Industrie erwünscht, da erwartet wird, daß sie den Flüssigkeitstransport z.B. in der Windel verbessern. Der erfindungsgemäße Klebstoff ist hydrophil und erzielt zusätzlich noch eine ausreichende Klebkraft zwischen der Polyolefin-Folie und dem Vlies.

Gegenstand der Erfindung ist auch ein Verfahren gemäss Anspruch 10 zur Herstellung eines Verbundwerkstoffs aus mindestens zwei gleichen oder unterschiedlichen Materialien, dadurch gekennzeichnet, daß ein Klebstoff enthaltend Komponenten A und B eingesetzt wird.

Im Rahmen der erfindungsgemäßen Verfahrens wird der Klebstoff in der Regel in einer Menge von etwa 0,1 bis etwa 10 g/m², vorzugsweise in einer Menge von etwa 1 bis etwa 6 g/m² und insbesondere in einer Menge von etwa 3 bis etwa 5 g/m² zumindest in Teilbereichen auf eines der zu verklebenden Substrate aufgetragen. Vorzugsweise erfolgt der Auftrag jedoch vollflächig.

Der erfindungsgemäße Klebstoff wird dabei auf eine Temperatur von etwa 100 bis etwa 180°C erwärmt. Die Klebstofftemperatur richtet sich dabei nach der Viskosität und dem verwendeten Auftragsverfahren. Beispielsweise kann der Klebstoffauftrag über eine Schlitzdüse erfolgen. In diesem Fall hat sich beispielsweise eine Klebstofftemperatur von etwa 130 bis etwa 150°C bewährt. Eine weitere Möglichkeit den erfindungsgemäßen Klebstoff auf das zu verklebende Substrat aufzutragen bietet das Spiralsprühverfahren sowie auch das Control-Coat-Verfahren, wobei sich Klebstofftemperaturen von etwa 150 bis etwa 170°C bewährt haben.

Das erfindungsgemäße Verfahren eignet sich zum Verbinden unterschiedlichster Materialien. So lassen sich Materialien wie Polyolefinfolien, beispielsweise Polyethylenfolien oder Polypropylenfolien, Polyolefinvliese, beispielsweise Polyethylenvliese oder Polypropylenvliese, Polyurethanfolien, Polyurethanschäume, Folien oder Formkörper aus Cellulosederivaten, beispielsweise aus Zellstoff (Tissues), Folien oder Formkörper aus Polyacrylaten oder Polymethacrylaten, Folien oder Formkörper aus Polyester untereinander verbinden. Eine Verbindung ist dabei sowohl unter gleichen Materialien als auch unter verschiedenen Materialien möglich.

Unter dem Gesichtspunkt der biologischen Abbaubarkeit sind Folien und Fasern (sowohl Endlos- als auch Stapel-Fasern), einschließlich der daraus hergestellten Vliese, aus folgenden Materialien bevorzugt: Polyester, insbesondere Polylactid, Polyhydroxybutyrat, Polyhydroxyvalerat, Polycaprolacton, Polyesterurethan, Polyesteramid sowie Materialien auf der Basis von Stärke und Cellulose, z.B. thermoplastische Stärke und Viskose. Daraus hergestellte Gebrauchsgegenstände sind zusammen mit dem erfindungsgemäßen Klebstoff besonders gut biologisch abbaubar, z.B. Verpackungen, Beutel, Steckschäume, medizinische Artikel wie Pflaster oder Verbandmaterial und Hygieneartikel wie Windel, Tampons, Slip-Einlagen oder Binden.

Vorzugsweise werden im Rahmen der erfindungsgemäßen Verfahren bahn-oder bogenförmige Materialien miteinander verbunden. Der auf diese Weise hergestellte Verbundwerkstoff kann zwei oder mehr Lagen aufweisen.

In einer bevorzugten Ausführungsform des erfindungsgemäßen Verfahrens ist mindestens eines der mindestens zwei gleichen oder unterschiedlichen Materialien ein Polyolefin. So eignet sich als Substrat beispielsweise eine Polyolefinfolie, insbesondere eine Polethylenfolie. Die Substratdicke kann in weiten Bereichen variieren. Beispielsweise als Substrat geeignet sind Polyethylenfolien mit einer Dicke von etwa 10 bis etwa 50 µm, insbesondere etwa 20 bis etwa 30 µm.

Als zweites, mit dem Substrat zu verklebendes Material eignet sich insbesondere eine Vliesstofflage, vorzugsweise eine Vliesstofflage die ein Polyolefin enthält oder aus einem Polyolefin besteht.

Unter einer "Vliesstofflage" wird im Rahmen der vorliegenden Erfindung ein flexibles Flächengebilde verstanden, das nicht durch die klassische Methode der Gewebebindung von Kette und Schuß oder durch Maschenbildung, sondern durch Verschlingung und/oder kohäsive und/oder adhäsive Verbindung von Texilfasern hergestellt wird. Unter Vliesstoffen werden damit lockere Materialien aus Spinnfasem oder Filamenten, meist aus Polypropylen, Polyester oder Viscose hergestellt, verstanden, deren Zusammenhalt im allgemeinen durch die den Fasern eigene Haftung gegeben ist. Hierbei können die Einzelfasern eine Vorzugsrichtung aufweisen (orientierte oder Kreuzlage-Vliese) oder ungerichtet sein (Wirrvliese). Die Vliese können mechanisch verfestigt werden durch Vernadeln, Vermaschen oder durch Verwirbeln mittels scharfer Wasserstrahlen (sog. spunlaced Vliese). Adhäsiv verfestigte Vliese entstehen durch Verkleben der Fasern mit flüssigen Bindemitteln (beispielsweise Acrylat-Polymere, SBR/NBR, Polyvinylester- oder Polyurethan-Dispersionen) oder durch Schmelzen bzw. Auflösen von sogenannten Bindefasem, die dem Vlies bei der Herstellung beigemischt wurden. Bei der kohäsiven Verfestigung werden die Faseroberflächen durch geeignete Chemikalien gelöst und durch Druck verbunden oder bei erhöhter Temperatur verschweißt. Vliese aus sogenannten Spinnvliesen, d.h. durch Verspinnen und anschließendes Ablegen, Aufblasen oder Aufschwemmen auf ein Transportband hergestellte Flächengebilde, nennt man Spinnvliesstoffe. Zusätzliche Fäden, Gewebe oder Gewirke enthaltende Vliesstoffe gelten als verstärkte Vliesstoffe.

In einer bevorzugten Ausführungsform des erfindungsgemäßen Verfahrens wird der Klebstoff zur Herstellung eines mindestens eine Vliesstofflage enthaltenden Verbundwerkstoffs eingesetzt. Besonders bevorzugt ist es, wenn als Vliesstofflage ein Polypropylen-Spinnvlies mit einem Flächengewicht von etwa 10 bis etwa 30 g/m², insbesondere etwa 15 bis etwa 20 g/m² eingesetzt wird.

Die erfindungsgemäßen Klebstoffe können in einer Reihe von Anwendungen zum Einsatz kommen. Beispielsweise bei der Verpackung von Gegenständen. Besonders bevorzugt ist allerdings der Einsatz bei der Herstellung von Verbundwerkstoffen, z.B. Folie/Folie-, FolieNlies- und Vlies/Vlies-Verbunden, insbesondere zur Herstellung mindestens einen Vliesstoff enthaltenden Verbundwerkstoffen. Hierzu gehören insbesondere Wegwerfartikel, beispielsweise Windeln, Krankenhaustextilien, Binden, Bettauflagen und dergleichen, vorzugsweise im Hygiene- und Medikal-Bereich.

Hierfür eignen sich die erfindungsgemäßen Klebstoffe u.a. auch wegen ihrer Lotionresistenz. Um die "Skin-Care"-Eigenschaften von z.B. Windeln zu verbessern, werden deren Top-Sheets mit hautverträglichen Lotionen ausgerüstet. Solche lotionbeschichtete Windeln stellen besondere Anforderungen an den Klebstoff, da dadurch die Haftwerte des Klebeverbundes vermindert werden können. So wurde z.B. bei bekannten Klebstoffen auf der Basis von SIS-Kautschuk eine starke Reduktion der Haftwerte von Vlies/Folien-Laminaten festgestellt, nachdem ca. 4 g/m² einer Lotion auf der Basis von Fettalkohol aufgebracht wurde. Die Reduktion lag im Bereich von 30 bis 70 % nach 24 Stunden bei Raumtemperatur und im Bereich von 40 bis 90 % nach 4 Stunden bei 40 °C.

Derartige Lotionen sind z.B. in der WO 96/16682 beschrieben. Ihr diesbezüglicher Inhalt wird ausdrücklich in die vorliegende Anmeldung übernommen. Es handelt sich dabei um bei 20 °C halbfeste bis feste Stoffgemische mit Linderungsmittel auf der Basis von Fettsäureestern, Alkylethoxylaten, ethoxylierten Fettsäureestem, Fettalkoholen, Polysiloxanen und Erdöl-basierten Produkten sowie deren Mischung, mit immobilisierenden Mitteln wie Polyhydroxyfettsäureestern, Polyhydroxyfettsäureamiden, C₁₄-C₂₂-Fettalkoholen, -Fettalkoholethoxylaten, -Fettsäuren und Paraffinwachsen sowie deren Mischungen. Gewünschtenfalls können noch Hilfsstoffe anwesend sein, um weitere Effekte zu bewirken, z.B. hydrophile oberflächenaktive Stoffe, Viskositätsregler, Duftstoffe, Desinfektionsmittel, Filmbildner usw..
Die Lotionen sollten zweckmäßigerweise im Bereich von ca. 40 bis ca. 70 °C schmelzen.
Gegenüber derartigen Lotion zeigen die erfindungsgemäßen Klebstoffe eine wesentlich bessere Beständigkeit der Haftwerte.

Das folgende Beispiel dient der näheren Erläuterungen der Erfindung.

### Beispiele

### Beispiel 1

Als Komponente A wurde ein hochmolekularer amorphen Polyester, erhältlich aus der Umsetzung von Diethylenglykol, Ethylenglykol, Isophthalsäure und Adipinsäure mit einem Molekulargewicht (Mₙ) von mehr als 10.000 und einer Glasübergangstemperatur T_{g} von 2,6 °C eingesetzt. Der als Komponente A verwendete Polyester wies bei 100°C eine Viskosität von 50 Pas und bei 140°C ein Viskosität von 9,9 Pas, eine Säurezahl von 6 und eine OH-Zahl von 9 auf.

Als Komponente B1 wurde ein Polyester bestehend aus Phthalsäure, Adipinsäure, Ethylenglykol und 1,2-Propandiol im Verhältnis von 3,5 : 1,4 : 2,1 : 3,1 eingesetzt. Der Polyester wies eine Glastemperatur von 13 °C und eine Viskosität von 21,7 Pas bei 90 °C (Brookfield CAP 2000, 90 °C, Cone 6, 50 U/min, 25 s Meßzeit) auf.

Als Komponente B2 wurde ein Polyester bestehend aus Terephthalsäure, Adipinsäure, Isophthalsäure und 1,4-Butandiol im Verhältnis von 1 : 1,1 : 1 : 3,3 eingesetzt. Der Polyester wies eine Glasübergangstemperatur T_{g} von - 20 °C und eine Erweichungstemperatur von 90 °C auf.

Die Komponenten A, B1 und B2 wurden in einem Verhältnis von 1 : 0,5 : 1 gemischt.

Der Klebstoff hat einen Kontaktwinkel gegenüber Wasser von 31 °.

Mit dem so erhältlichen Klebstoff wurde eine Verklebung von Vliesstoff (Polypropylen-Spinnvlies, Flächendichte: 17 g/m²) auf Polyethylenfolie (Dicke: 25 µm), vorgenommen. Hierzu wurde der Klebstoff mit einer Temperatur von 140°C in einer Menge von 4 g/m² vollflächig auf die Polyethylenfolie durch eine Schlitzdüse bei einer Auftragsgeschwindigkeit von 20 m/min aufgetragen und anschließend das Vlies mit einem Kaschierdruck von 4 - 6 bar aufgebracht.

Anschließend wurde ein Versuch zur Bestimmung des Haftwerts durchgeführt. Hierzu wurde ein etwa 50 mm breiter Streifen des so erhaltenen Verbundmaterials für 24 h in einer Klimakammer bei 20°C und einer rel. Luftfeuchte von 50% gelagert und anschließend in einem Tensile-Tester mit einer Zugrichtung von 180° bei einer Zuggeschwindigkeit von 300 mm/min auf Haftfähigkeit untersucht. Hierbei trat ein Materialriß im Vliesstoff auf, die Klebeverbindung zwischen Folie und Vliesstoff wurde nicht beschädigt.

Das Folien/Vlies-Laminat wurde mit 4 g/m² Fett-Partialglyceriden mit einem Schmelzpunkt von a) ca. 40 und b) ca. 70 °C gleichmäßig beschichtet. Nach 24 Stunden bei RT waren die Haftwerte nahezu unverändert hoch und nach 4 Stunden bei 40 °C nur um 0 bis zu 30 % reduziert, d.h. ca. 30 %, bezogen auf den Reiß-Wert des Vliesstoffes.

In einem modifizierten Bodis-Test (Iso 10708) auf vollständige biologische Abbaubarkeit zeigte der erfindungsgemäße Klebstoff doppelt so hohe Abbaubarkeitswerte, wie konventionelle Klebstoffe auf Basis von Kautschuk oder APP.

### Beispiel 2

Es wurde ein Klebstoff hergestellt, indem die folgenden Polyester in den angegebenen Mengen gemischt wurden:
- 2 Teile eines Polyesters aus Terphthalsäure, Adipinsäure, Isophthalsäure und 1,4-Butandiol im Verhältnis von 1 : 1,1 : 1 : 3,3. Der Polyester wies eine Glasübergangstemperatur T_{g} von -20 °C und eine Erweichungstemperatur von 90 °C auf. 1,5 Teile eines Polyesters aus Phthalsäure, Adipinsäure, Ethylenglykol und 1,2-Propandiol im Verhältnis von 3,5 : 1,4 : 2,1 : 3,1. Der Polyester wies eine Glasteamperatur von 13 °C und eine Viskosität von 21,7 Pas bei 90 °C (Brookfield CAP 2000, 90 °C, Cone 6, 50 U/min, 25 s Meßzeit) auf und
- 2 Teile Polyester aus Diethylenglykol, Ethylenglykol, Isophthalsäure, Adipinsäure, Sebacinsäure, OH-Zahl 6, Säurezahl 4, Glasübergangstemperatur Tg ca. -1,8 °C.

Der Kontaktwinkel betrug 30 °.

### Beispiel 3

Es wurden Laminate aus einer Folie auf der Basis von thermoplastischer Stärke einerseits und derselben Folie bzw. einem Vlies auf der Basis von Milchsäure andererseits durch Control-Coat-Auftrag des erfindungsgemäßen Klebstoffes gemäß Beispiel 1 auf das Vlies bzw. der Folie bei 140 °C ohne Probleme hergestellt.

Die Haftwerte dieser Laminate waren im Falle von Folie/Folie-Laminat so hoch, daß sich nicht gemessen werden konnten. Im Falle des Folie/Vlies-Laminates lagen sie nahezu auf den Werten von Laminaten üblicher (nicht abbaubarer) Substrate.

Der Klebstoff und der geschredderten Laminate wurden gemäß DIN 54900, Teil 2 (Entwurf) kompostiert, wobei für den Klebstoff Kieselgel als Träger diente, und zwar 20 % Klebstoff auf Kieselgel.

Der erfindungsgemäße Klebstoff wurde bereits innerhalb von 45 Tagen nahezu vollständig abgebaut, wofür die prüfmuster-bezogenen CO₂-Bildungsraten sprachen. Die geschredderten Laminate waren ebenfalls innerhalb von 45 Tagen nahezu vollständig abgebaut, wofür die prüfmuster-bezogenen CO₂-Bildungsraten sowie die zusätzliche visuelle Wertung des Versuchsmaterials sprach. Es war nämlich kein Rückstand von den Prüfmustern zu sehen.

## Patentansprüche

1. Klebstoff enthaltend 20 Gew.-% bis 95 Gew.-% der Komponente A und 80 Gew.-% bis 5 Gew.-% der Komponente B. bei dem
a) Komponente A mindestens einen Polyester mit einem Molekulargewicht (Mn) von mindestens 8.000 enthält und eine Gesamtschmelzenthalpie von höchstens 20 mJ/mg aufweist, wobei der Polyester
(i) aus einer ersten Säurekomponente, ausgewählt aus der Gruppe Butandicarbonsäure (Bernsteinsäure), Pentandicarbonsäure (Glutarsäure), Hexandicarbonsäure (Adipinsäure), Heptandicarbonsäure (Pimelinsäure), Octandicarbonsäure (Korksäure, Suberinsäure), Nonandicarbonsäure (Azelainsäure), Decandicarbonsäure (Sebacinsäure), Maleinsäure, Fumarsäure, dimere oder trimere Fettsäuren, Cyclohexandicarbonsäure, Cyclohexendicarbonsäure, Cyclohexadiendicarbonsäure, Endomethylenhexahydrophthalsäure oder Cyclohexantricarbonsäure, Phthalsäure, Isophthalsäure, Terephthalsäure oder Trimellithsäure, der Säureanhydride der genannten Polycarbonsäuren oder deren Ester mit aliphatischen Alkoholen mit 1 bis 4 C-Atomen
(ii) aus einer zweiten Säurekomponente, die sich von der ersten Säurekomponente unterscheidet, ausgewählt aus der Gruppe einer ersten Säurekomponente, ausgewählt aus der Gruppe Butandicarbonsäure (Bernsteinsäure), Pentandicarbonsäure (Glutarsäure), Hexandicarbonsäure (Adipinsäure), Heptandicarbonsäure (Pimelinsäure), Octandicarbonsäure (Korksäure, Suberinsäure), Nonandicarbonsäure (Azelainsäure), Decandicarbonsäure (Sebacinsäure), Maleinsäure, Fumarsäure, dimere oder trimere Fettsäuren, Cyclohexandicarbonsäure, Cyclohexendicarbonsäure, Cyclohexadiendicarbonsäure, Endomethylenhexahydrophthalsäure oder Cyclohexantricarbonsäure. Phthalsäure, Isophthalsäure, Terephthalsäure oder Trimellithsäure, der Säureanhydride der genannten Polycarbonsäuren oder deren Ester mit aliphatischen Alkoholen mit 1 bis 4 C-Atomen und
(iii) mindestens einer ersten Alkoholkomponente aufgebaut ist,
wobei wenigstens die erste oder zweite Säurekomponente eine aromatische Säurekomponente ist,
und
b) Komponente B mindestens einen Polyester mit einem Molekulargewicht (Mₙ) von weniger als 8000, insbesondere 1000 bis 6500, und einer Glasübergangstemperatur von höchstens 60°C, insbesondere von -25 bis 40°C enthält, wobei der Polyester
(i) aus einer ersten Säurekomponente, ausgewählt aus der Gruppe Butandicarbonsäure (Bernsteinsäure), Pentandicarbonsäure (Glutarsäure), Hexandicarbonsäure (Adipinsäure), Heptandicarbonsäure (Pimelinsäure), Octandicarbonsäure (Korksäure, Suberinsäure), Nonandicarbonsäure (Azelainsäure), Decandicarbonsäure (Sebacinsäure), Maleinsäure, Fumarsäure, dimere oder trimere Fettsäuren, Cyclohexandicarbonsäure, Cyclohexendicarbonsäure, Cyclohexadiendicarbonsäure, Endomethylenhexahydrophthalsäure oder Cyclohexantricarbonsäure, Phthalsäure, Isophthalsäure, Terephthalsäure oder Trimellithsäure, der Säureanhydride der genannten Polycarbonsäuren oder deren Ester mit aliphatischen Alkoholen mit 1 bis 4 C-Atomen,
(ii) aus einer zweiten Säurekomponente, die sich von der ersten Säurekomponente unterscheidet, ausgewählt aus der Gruppe Butandicarbonsäure (Bernsteinsäure), Pentandicarbonsäure (Glutarsäure), Hexandicarbonsäure (Adipinsäure), Heptandicarbonsäure (Pimelinsäure), Octandicarbonsäure (Korksäure, Suberinsäure), Nonandicarbonsäure (Azelainsäure), Decandicarbonsäure (Sebacinsäure), Maleinsäure, Fumarsäure, dimere oder trimere Fettsäuren, Cyclohexandicarbonsäure, Cyclohexendicarbonsäure, Cyclohexadiendicarbonsäure, Endomethylenhexahydrophthalsäure oder Cyclohexantricarbonsäure, Phthalsäure, Isophthalsäure, Terephthalsäure oder Trimellithsäure, der Säureanhydride der genannten Polycarbonsäuren oder deren Ester mit aliphatischen Alkoholen mit 1 bis 4 C-Atomen und
(iii) mindestens einer ersten Alkoholkomponente aufgebaut ist,
und
wobei wenigstens die erste oder zweite Säurekomponente eine aromatische Säurekomponente ist,
wobei der Klebstoff eine Schmelzviskosität von 500 bis 25.000 mPas (Brookfield RVT DVII, 140°C, Spindel 27) und einen Erweichungspunkt von 70 bis 100°C (ASTM E 28) aufweist.

2. Klebstoff nach Anspruch 1, **dadurch gekennzeichnet, dass** der jeweilige Polyester so aufgebaut ist, dass er als eine erste Alkoholkomponente Ethylenglykol, Neopentylglykol, 1,2-Propylenglykol, 1,3-Propylenglykol, den isomeren Butylenglykolen, Pentandiolen und Hexandiolen, Dianhydrosorbit, Diethylenglykol, Triethylenglykol, deren reinen oder untereinander gemischten Ethern, oder deren Umsetzungsprodukten mit C₁₋₄-Alkylenoxiden, aufweist.

3. Klebstoff nach einem der Ansprüche 1 oder 2, **dadurch gekennzeichnet, dass** Komponente B einen amorphen Polyester mit einem Molekulargewicht (Mₙ) von 1500 bis 4000, einer Glasübergangstemperatur T_{g} von 5 bis 20°C und einer Viskosität von 5.000 bis. 25.000 mPas (Brookfield CAP 2000, 90°C, Cone 6.50 U/min, 25 s Meßzeit) als Komponente B1 enthält.

4. Klebstoff nach einem der Ansprüche 1 oder 2, **dadurch gekennzeichnet, dass** Komponente B einen amorphen Polyester mit einem Molekulargewicht (Mₙ) von 400 bis 4000 und einer Glasübergangstemperatur T_{g} von -40 bis -15°C als Komponente B2 enthält.

5. Klebstoff nach einem der Ansprüche 1 oder 2, **dadurch gekennzeichnet, dass** Komponente B einen amorphen Polyester mit einem Molekulargewicht (Mₙ) von weniger als 500 und einer Glasübergangstemperatur T_{g} von weniger als - 40°C als Komponente B3 enthält.

6. Klebstoff nach einem der Ansprüche 1 bis 5, **dadurch gekennzeichnet, dass** die Komponente B ein Gemisch aus mindestens zwei Polyestern enthält, die eine unterschiedliche Glasübergangstemperatur oder ein unterschiedliches Molekulargewicht (Mₙ) oder beides aufweisen.

7. Klebstoff nach Anspruch 6, **dadurch gekennzeichnet, dass** Komponente B ein Gemisch aus mindestens zwei der Komponenten B1, B2 oder B3 enthält.

8. Klebstoff nach einem der Ansprüche 1 bis 7, **dadurch gekennzeichnet, dass** der Klebstoff gemäß DIN 54900, Teil 2 (Entwurf) biologisch abbaubar ist, vorzugsweise innerhalb von 90 Tagen.

9. Klebstoff nach einem der Ansprüche 1 bis 8, **dadurch gekennzeichnet, dass** der Klebstoff einen Kontaktwinkel im Bereich von 20 bis 50° hat.

10. Verfahren zur Herstellung eines Verbundwerkstoffs aus mindestens zwei gleichen oder unterschiedlichen Materialien, **dadurch gekennzeichnet, dass** ein Klebstoff enthaltend 20 bis 95 Gew.-% der Komponente A und 80 bis 5 Gew.-% der Komponente B gemäß einem der Ansprüche 1 bis 9 eingesetzt wird.

11. Verfahren nach Anspruch 10, **dadurch gekennzeichnet, dass** mindestens eines der mindestens zwei gleichen oder unterschiedlichen Materialien ein Polyolefin ist.

12. Verfahren nach Anspruch 10 oder 11, **dadurch gekennzeichnet, dass** mindestens eines der mindestens zwei gleichen oder unterschiedlichen Materialien ein Vliesstoff ist.

13. Verwendung eines Klebstoffs nach einem der Ansprüche 1 bis 9 zur Herstellung eines Verbundwerkstoffs aus zwei gleichen oder unterschiedlichen Materialien.

14. Verwendung nach Anspruch 13 zur Herstellung von Hygieneartikeln, insbesondere mit einer hautverträglichen Beschichtung des Top-Sheets.

15. Verbundwerkstoff, hergestellt unter Verwendung eines Klebstoffs gemäß einem der Ansprüche 1 bis 9 oder hergestellt nach einem Verfahren gemäß einem der Ansprüche 10 bis 12.

## Claims

1. An adhesive containing 20% by weight to 95% by weight of component A and 80% by weight to 5% by weight of component B, in which
a) component A contains at least one polyester with a molecular weight (Mₙ) of at least 8000 and has a total enthalpy of fusion of at most 20 mJ/mg, the polyester being produced from
(i) a first acid component selected from the group consisting of butane dicarboxylic acid (succinic acid), pentane dicarboxylic acid (glutaric acid), hexane dicarboxylic acid (adipic acid), heptane dicarboxylic acid (pimelic acid), octane dicarboxylic acid (suberic acid), nonane dicarboxylic acid (azelaic acid), decane dicarboxylic acid (sebacic acid), maleic acid, fumaric acid, dimeric or trimeric fatty acids, cyclohexane dicarboxylic acid, cyclohexene dicarboxylic acid, cyclohexadiene dicarboxylic acid, endomethylene hexahydrophthalic acid or cyclohexane tricarboxylic acid, phthalic acid, isophthalic acid, terephthalic acid or trimellitic acid, anhydrides of the polycarboxylic acids mentioned or esters thereof with aliphatic C₁₋₄ alcohols
(ii) a second acid component different from the first acid component and selected from the group of a first acid component selected from the group consisting of butane dicarboxylic acid (succinic acid), pentane dicarboxylic acid (glutaric acid), hexane dicarboxylic acid (adipic acid), heptane dicarboxylic acid (pimelic acid), octane dicarboxylic acid (suberic acid), nonane dicarboxylic acid (azelaic acid), decane dicarboxylic acid (sebacic acid), maleic acid, fumaric acid, dimeric or trimeric fatty acids, cyclohexane dicarboxylic acid, cyclohexene dicarboxylic acid, cyclohexadiene dicarboxylic acid, endomethylene hexahydrophthalic acid or cyclohexane tricarboxylic acid, phthalic acid, isophthalic acid, terephthalic acid or trimellitic acid, anhydrides of the polycarboxylic acids mentioned or esters thereof with aliphatic C₁₋₄ alcohols and
(iii) at least a first alcohol component,
at least the first or second acid component being an aromatic acid component,
and
b) component B contains at least one polyester with a molecular weight (Mₙ) of less than 8000 and, more particularly, in the range from 1000 to 6500 and a glass transition temperature of at most 60°C and, more particularly, in the range from -25 to 40°C, the polyester being produced from
(i) a first acid component selected from the group consisting of butane dicarboxylic acid (succinic acid), pentane dicarboxylic acid (glutaric acid), hexane dicarboxylic acid (adipic acid), heptane dicarboxylic acid (pimelic acid), octane dicarboxylic acid (suberic acid), nonane dicarboxylic acid (azelaic acid), decane dicarboxylic acid (sebacic acid), maleic acid, fumaric acid, dimeric or trimeric fatty acids, cyclohexane dicarboxylic acid, cyclohexene dicarboxylic acid, cyclohexadiene dicarboxylic acid, endomethylene hexahydrophthalic acid or cyclohexane tricarboxylic acid, phthalic acid, isophthalic acid, terephthalic acid or trimellitic acid, anhydrides of the polycarboxylic acids mentioned or esters thereof with aliphatic C₁₋₄ alcohols
(ii) a second acid component different from the first acid component and selected from the group consisting of butane dicarboxylic acid (succinic acid), pentane dicarboxylic acid (glutaric acid), hexane dicarboxylic acid (adipic acid), heptane dicarboxylic acid (pimelic acid), octane dicarboxylic acid (suberic acid), nonane dicarboxylic acid (azelaic acid), decane dicarboxylic acid (sebacic acid), maleic acid, fumaric acid, dimeric or trimeric fatty acids, cyclohexane dicarboxylic acid, cyclohexene dicarboxylic acid, cyclohexadiene dicarboxylic acid, endomethylene hexahydrophthalic acid or cyclohexane tricarboxylic acid, phthalic acid, isophthalic acid, terephthalic acid or trimellitic acid, anhydrides of the polycarboxylic acids mentioned or esters thereof with aliphatic C₁₋₄ alcohols and
(iii) at least a first alcohol component,
and at least the first or second acid component being an aromatic acid component,
the adhesive having a melt viscosity of 500 to 25,000 mPas (Brookfield RVT DVII, 140°C, spindle 27) and a softening point of 70 to 100°C (ASTM E28).

2. An adhesive as claimed in claim 1, **characterized in that** the polyester is synthesized in such a way that it contains as a first alcohol component ethylene glycol, neopentyl glycol, 1,2-propylene glycol, 1,3-propylene glycol, the isomeric butylene glycols, pentane diols and hexane diols, dianhydrosorbitol, diethylene glycol, triethylene glycol, pure or mixed ethers thereof or reaction products thereof with C₁₋₄ alkylene oxides.

3. An adhesive as claimed in claim 1 or 2, **characterized in that** component B contains an amorphous polyester with a molecular weight (Mₙ) of 1500 to 4000, a glass transition temperature T_{g} of 5 to 20°C and a viscosity of 5,000 to 25,000 mPas (Brookfield CAP 2000), 90°C, cone 6, 50 r.p.m., measuring time 25 s) as component B1.

4. An adhesive as claimed in claim 1 or 2, **characterized in that** component B contains an amorphous polyester with a molecular weight (Mₙ) of 400 to 4000 and a glass transition temperature T_{g} of -40 to -15°C as component B2.

5. An adhesive as claimed in claim 1 or 2, **characterized in that** component B contains an amorphous polyester with a molecular weight (Mₙ) of less than 500 and a glass transition temperature T_{g} below -40°C as component B3.

6. An adhesive as claimed in any of claims 1 to 5, **characterized in that** component B contains a mixture of at least two polyesters with different glass transition temperatures or different molecular weights (Mₙ) or both.

7. An adhesive as claimed in claim 6, **characterized in that** component B contains a mixture of at least two of components B1, B2 and B3.

8. An adhesive as claimed in any of claims 1 to 7, **characterized in that** the adhesive is biodegradable, preferably in 90 days, according to DIN 54900, Part 2 (Draft).

9. An adhesive as claimed in any of claims 1 to 8, **characterized in that** the adhesive has a contact angle of 20 to 50°.

10. A process for the production of a composite material of at least two identical or different materials, **characterized in that** an adhesive containing 20 to 95% by weight of component A and 80 to 5% by weight of component B as claimed in any of claims 1 to 9 is used.

11. A process as claimed in claim 10, **characterized in that** at least one of the at least two like or different materials is a polyolefin.

12. A process as claimed in claim 10 or 11, **characterized in that** at least one of the at least two like or different materials is a nonwoven.

13. The use of the adhesive claimed in any of claims 1 to 9 for making a composite material of two like or different materials.

14. The use claimed in claim 13 for making hygiene articles, more particularly with a dermatologically compatible coating of the top sheet.

15. A composite material made with the adhesive claimed in any of claims 1 to 9 or made by the process claimed in any of claims 10 to 12.

## Revendications

1. Adhésif contenant le composant A, à concurrence de 20 % en poids à 95 % en poids et le composant B, à concurrence de 80 % en poids à 5 % en poids, dans lequel
a) le composant A contient au moins un polyester possédant un poids moléculaire (Mₙ) d'au moins 8000 et présente une enthalpie de fusion globale maximale de 20 mJ/mg, le polyester étant composé
(i) d'un premier composant acide choisi parmi le groupe comprenant l'acide butanedicarboxylique (acide succinique), l'acide pentanedicarboxylique (acide glutarique), l'acide hexanedicarboxylique (acide adipique), l'acide heptanedicarboxylique (acide pimélique), l'acide octanedicarboxylique (acide subérique), l'acide nonanedicarboxylique (acide azélaïque), l'acide décanedicarboxylique (acide sébacique), l'acide maléique, l'acide fumarique, des acides gras dimères ou trimères, l'acide cyclohexanedicarboxylique, l'acide cyclohexène-dicarboxylique, l'acide cyclohexadiènedicarboxylique, l'acide endométhylènehexahydrophtalique ou l'acide cyclohexanetricarboxylique, l'acide phtalique, l'acide isophtalique, l'acide téréphtalique ou l'acide trimellitique, des anhydrides des acides polycarboxyliques mentionnés ou de leurs esters avec des alcools aliphatiques contenant de 1 à 4 atomes de carbone ;
(ii) d'un deuxième composant acide, qui se distingue du premier composant acide choisi parmi le groupe d'un premier composant acide, choisi parmi le groupe comprenant l'acide butanedicarboxylique (acide succinique), l'acide pentanedicarboxylique (acide glutarique), l'acide hexanedicarboxylique (acide adipique), l'acide heptanedicarboxylique (acide pimélique), l'acide octanedicarboxylique (acide subérique), l'acide nonanedicarboxylique (acide azélaïque), l'acide décanedicarboxylique (acide sébacique), l'acide maléique, l'acide fumarique, des acides gras dimères ou trimères, l'acide cyclohexanedicarboxylique, l'acide cyclohexène-dicarboxylique, l'acide cyclohexadiènedicarboxylique, l'acide endométhylènehexahydrophtalique ou l'acide cyclohexanetricarboxylique, l'acide phtalique, l'acide isophtalique, l'acide téréphtalique ou l'acide trimellitique, des anhydrides des acides polycarboxyliques mentionnés ou de leurs esters avec des alcools aliphatiques contenant de 1 à 4 atomes de carbone ; et
(iii) d'au moins un premier composant alcool,
au moins le premier ou le deuxième composant acide étant un composant acide aromatique,
et
b) le composant B contient au moins un polyester possédant un poids moléculaire (Mₙ) de moins de 8000, en particulier de 1000 à 6500, et une température de transition vitreuse maximale de 60 °C, en particulier de -25 à 40 °C, le polyester étant composé
(i) d'un premier composant acide choisi parmi le groupe comprenant l'acide butanedicarboxylique (acide succinique), l'acide pentanedicarboxylique (acide glutarique), l'acide hexanedicarboxylique (acide adipique), l'acide heptanedicarboxylique (acide pimélique), l'acide octanedicarboxylique (acide subérique), l'acide nonanedicarboxylique (acide azélaïque), l'acide décanedicarboxylique (acide sébacique), l'acide maléique, l'acide fumarique, des acides gras dimères ou trimères, l'acide cyclohexanedicarboxylique, l'acide cyclohexène-dicarboxylique, l'acide cyclohexadiènedicarboxylique, l'acide endométhylènehexahydrophtalique ou l'acide cyclohexanetricarboxylique, l'acide phtalique, l'acide isophtalique, l'acide téréphtalique ou l'acide trimellitique, des anhydrides des acides polycarboxyliques mentionnés ou de leurs esters avec des alcools aliphatiques contenant de 1 à 4 atomes de carbone ;
(ii) d'un deuxième composant acide, qui se distingue du premier composant acide, choisi parmi le groupe comprenant l'acide butanedicarboxylique (acide succinique), l'acide pentanedicarboxylique (acide glutarique), l'acide hexanedicarboxylique (acide adipique), l'acide heptanedicarboxylique (acide pimélique), l'acide octanedicarboxylique (acide subérique), l'acide nonanedicarboxylique (acide azélaïque), l'acide décanedicarboxylique (acide sébacique), l'acide maléique, l'acide fumarique, des acides gras dimères ou trimères, l'acide cyclohexanedicarboxylique, l'acide cyclohexène-dicarboxylique, l'acide cyclohexadiènedicarboxylique, l'acide endométhylènehexahydrophtalique ou l'acide cyclohexanetricarboxylique, l'acide phtalique, l'acide isophtalique, l'acide téréphtalique ou l'acide trimellitique, des anhydrides des acides polycarboxyliques mentionnés ou de leurs esters avec des alcools aliphatiques contenant de 1 à 4 atomes de carbone ; et
(iii) d'au moins un premier composant alcool,
et
au moins le premier ou le deuxième composant acide étant un composant acide aromatique,
l'adhésif présentant une viscosité en fusion de 500 à 25.000 mPa.s (Brookfield RVT DVII, 140 °C, broche 27) et un point de ramollissement de 70 à 100 °C (norme ASTM E 28).

2. Adhésif selon la revendication 1, **caractérisé en ce que** la composition du polyester respectif est telle que le polyester présente, à titre d'un premier composant alcool, l'éthylèneglycol, le néopentylglycol, le 1,2-propylèneglycol, le 1,3-propylèneglycol, les butylèneglycols, pentanediols et hexanediols isomères, le dianhydrosorbitol, le diéthylèneglycol, le triéthylèneglycol, leurs éthers purs ou mélangés les uns avec les autres, ou encore leurs produits réactionnels avec des oxydes d'alkylènes en C₁-C₄.

3. Adhésif selon l'une quelconque des revendications 1 ou 2, **caractérisé en ce que** le composant B contient un polyester amorphe possédant un poids moléculaire (Mₙ) de 1500 à 4000, une température de transition vitreuse Tg de 5 à 20 °C et une viscosité de 5000 à 25.000 mPa.s (Brookfield CAP 2000, 90 °C, cône 8,50 tours/minute, temps de mesure 25 sec) à titre de composant B1.

4. Adhésif selon l'une quelconque des revendications 1 ou 2, **caractérisé en ce que** le composant B contient un polyester amorphe possédant un poids moléculaire (Mₙ) de 400 à 4000 et une température de transition vitreuse Tg de -40 à -15 °C à titre de composant B2.

5. Adhésif selon l'une quelconque des revendications 1 ou 2, **caractérisé en ce que** le composant B contient un polyester amorphe possédant un poids moléculaire (Mₙ) inférieur à 500 et une température de transition vitreuse Tg inférieure à -40 °C à titre de composant B3.

6. Adhésif selon l'une quelconque des revendications 1 à 5, **caractérisé en ce que** le composant B contient un mélange d'au moins deux polyesters qui présentent une température de transition vitreuse différente ou un poids moléculaire (Mₙ) différent ou les deux.

7. Adhésif selon la revendication 6, **caractérisé en ce que** le composant B contient un mélange constitué par au moins deux des composants B1, B2 ou B3.

8. Adhésif selon l'une quelconque des revendications 1 à 7, **caractérisé en ce que** l'adhésif présente une biodégradabilité conformément à la norme DIN 54900, partie 2 (projet), de préférence dans un laps de temps de 90 jours.

9. Adhésif selon l'une quelconque des revendications 1 à 8, **caractérisé en ce que** l'adhésif possède un angle de contact dans la plage de 20 à 50°.

10. Procédé pour la préparation d'un adhésif composite constitué par au moins deux matières identiques ou différentes, **caractérisé en ce qu'**on met en oeuvre un adhésif contenant le composant A à concurrence de 20 à 95 % en poids et le composant B à concurrence de 80 à 5 % en poids, selon l'une quelconque des revendications 1 à 9.

11. Procédé selon la revendication 10, **caractérisé en ce qu'**au moins une des au moins deux matières identiques ou différentes est une polyoléfine.

12. Procédé selon la revendication 10 ou 11, **caractérisé en ce qu'**au moins une des au moins deux matières identiques ou différentes est un non-tissé.

13. Utilisation d'un adhésif selon l'une quelconque des revendications 1 à 9 pour la fabrication d'un matériau composite constitué par deux matières identiques ou différentes.

14. Utilisation selon la revendication 13, pour la préparation d'articles pour l'hygiène, en particulier dont la feuille supérieure est enduite d'une couche compatible avec la peau.

15. Matériau composite, fabriqué en utilisant un adhésif selon l'une quelconque des revendications 1 à 9 ou fabriqué conformément à un procédé selon l'une quelconque des revendications 10 à 12.
